Europäisches Patentamt

European Patent Office

Office européen des brevets

(19)

(11) Numéro de publication: **0 088 661**
**A1**

(12) # DEMANDE DE BREVET EUROPEEN

(21) Numéro de dépôt: **83400356.8**

(22) Date de dépôt: **22.02.83**

(51) Int. Cl.³: **G 05 D 11/03**, F 16 K 3/32

(30) Priorité: **05.03.82 FR 8203770**

(43) Date de publication de la demande: **14.09.83**
**Bulletin 83/37**

(84) Etats contractants désignés: **DE GB IT NL**

(71) Demandeur: **Hudelot, Jean-Philippe, Chabrol-Monbahus,
F-47920 Cancon (FR)**

(72) Inventeur: **Hudelot, Jean-Philippe, Chabrol-Monbahus,
F-47920 Cancon (FR)**

(74) Mandataire: **Moulines, Pierre et al, Cabinet BEAU de
LOMENIE 55, rue d'Amsterdam, F-75008 Paris (FR)**

(54) **Dispositif de contrôle d'injection réglable d'un fluide additif dans un liquide.**

(57) Dispositif de contrôle d'injection réglable d'un fluide additif dans un liquide s'écoulant dans un conduit principal qui est relié à un conduit secondaire véhiculant le fluide additif et dans lequel la pression est égale à celle régnant dans le conduit principal.

Dans le conduit principal (1), est disposé un organe d'étranglement (11) soumis à l'action d'un organe élastique (13) et s'opposant à l'écoulement du liquide dans ledit conduit principal (1), ledit organe d'étranglement (11) assurant l'entraînement d'un organe d'étranglement homothétique (14) disposé dans le conduit secondaire (9) d'alimentation en fluide additif.

L'invention est utilisée pour le contrôle de l'injection d'un fluide additif dans un liquide.

EP 0 088 661 A1

## Dispositif de contrôle d'injection réglable d'un fluide additif dans un liquide.

La présente invention a pour objet un dispositif de contrôle d'injection réglable d'un fluide additif dans un liquide, notamment de l'eau, s'écoulant dans un conduit principal qui est relié à un conduit secondaire véhiculant le fluide additif.

On connaît des appareils volumétriques destinés à effectuer cette opération ; toutefois, il faut noter que ceux-ci sont généralement limités en débit.

Par ailleurs, les dispositifs de contrôle de débit généralement utilisés font appel à des organes déprimogènes, tels qu'un venturi ou un diaphragme, dont la gamme de travail est obligatoirement limitée du fait que ces moyens sont régis par des lois quadratiques.

Le dispositif de contrôle d'injection réglable d'un fluide additif dans un liquide, suivant l'invention, permet de remédier aux inconvénients que l'on rencontre avec les dispositifs connus.

Dans le dispositif suivant l'invention, on utilise un moyen connu de régulation de pression qui alimente le dispositif de contrôle de débit à une pression exactement égale à celle régnant dans le conduit principal de liquide.

Conformément à la présente invention, dans le conduit principal est disposé un organe d'étranglement soumis à l'action d'un organe élastique et s'opposant à l'écoulement du liquide dans ledit conduit principal, ledit organe d'étranglement assurant l'entraînement d'un organe d'étranglement homothétique disposé dans le conduit secondaire d'alimentation en fluide additif.

Suivant une autre caractéristique de l'invention, l'organe d'étranglement disposé dans le conduit principal est constitué par une palette soumise à l'action d'un organe élastique agissant à l'encontre du flux de liquide, ladite palette étant montée rotative autour d'une tige présentant une partie tubulaire reliée au conduit de fluide additif et comportant un orifice d'ouverture réglable en fonction d'une part de la position angulaire d'un organe obturateur solidaire en rotation de la palette et d'autre part de la position axiale dudit orifice de la partie tubulaire de la tige par rapport à l'organe obturateur.

Cette disposition suivant l'invention permet de faire varier la consigne de proportionnalité en faisant varier la largeur de l'orifice de sortie du fluide additif.

En l'absence de débit, la palette referme rigoureusement l'orifice placé sur la tige autour de laquelle tourne la palette et, même si le débit est nul, on obtient une fermeture parfaite du dispositif se présentant comme un clapet.

D'autres caractéristiques et avantages de l'invention seront mieux compris à la lecture de la description qui va suivre d'un mode de réalisation et en se référant aux dessins annexés, sur lesquels :

la figure 1 est une vue schématique d'un dispositif de contrôle d'injection réglable suivant l'invention ;

la figure 2 est une vue en élévation et en coupe suivant la ligne II-II de la figure 3 du dispositif de contrôle d'injection réglable suivant l'invention ;

la figure 3 est une vue en coupe du dispositif suivant la ligne III-III de la figure 2 ;

la figure 4 est une vue de détail montrant la liaison entre le conduit principal et l'une des chambres du régulateur de pression ;

la figure 5 est une vue en coupe du dispositif suivant la ligne V-V de la figure 3 ; et

la figure 6 est une vue latérale du dispositif de contrôle d'injection suivant l'invention.

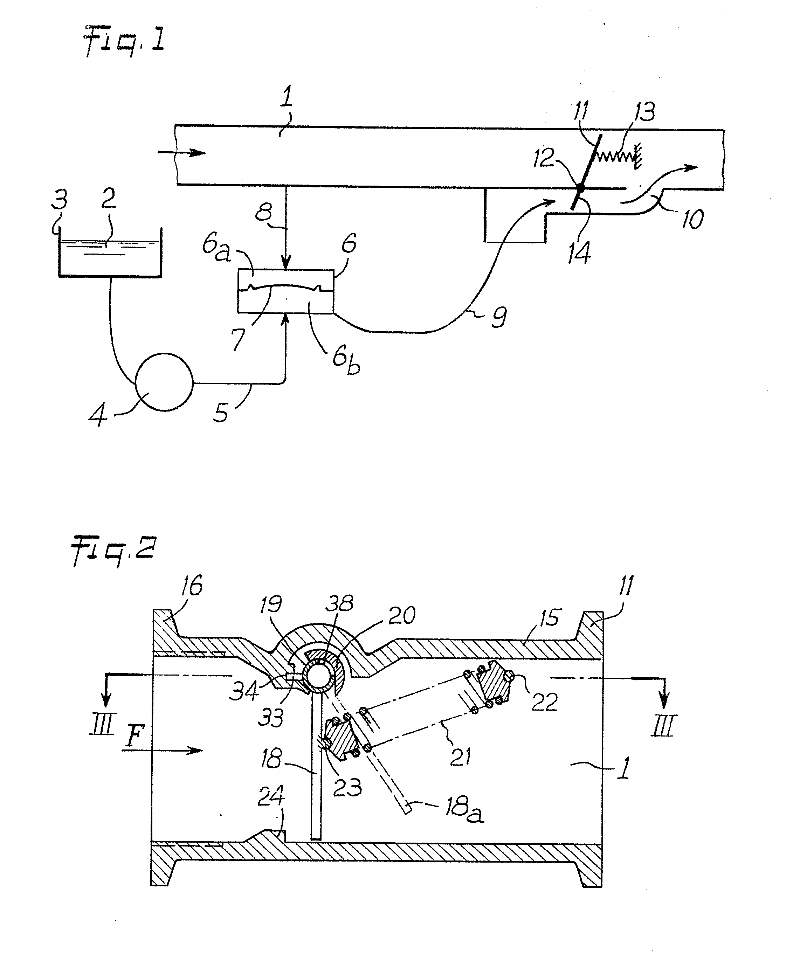

A la figure 1, on a représenté une installation de contrôle d'injection d'un fluide additif dans un liquide qui comprend un conduit principal 1 dans lequel circule le liquide auquel on doit ajouter un fluide additif 2 qui se trouve dans un réservoir 3 d'où il est refoulé dans un conduit 5 par une pompe 4. Le conduit 5 est relié à un régulateur de pression 6 comportant une membrane déformable 7 divisant celui-ci en deux chambres dont l'une 6a est reliée au conduit principal par un conduit 8 et dont l'autre 6b est reliée par un conduit 9 à un orifice 10 débouchant dans le conduit principal 1. Dans la chambre 6b débouche également le conduit 5 dont l'orifice de sortie est contrôlé par un clapet actionné par la membrane 7. De cette manière, le fluide additif refoulé par la pompe 4 à une pression Pl supérieure à la pression P régnant dans le conduit principal 1 est ramené à cette même pression P dans le conduit 9 débouchant par l'orifice 10 dans le conduit principal grâce à l'action du régulateur de pression dont la membrane 7 est soumise à l'action du liquide se trouvant dans le conduit principal à la pression P.

Dans le conduit 1 est montée pivotante autour d'un axe 12 une palette 11, ou organe d'étranglement, soumise à l'action d'un ressort 13 et s'opposant ainsi à l'écoulement du liquide dans le conduit principal, ladite palette ou organe d'étranglement 11 assurant l'entraînement d'un organe d'étranglement homothétique 14 disposé dans le conduit secondaire 9 d'alimentation en fluide additif. De cette manière on peut obtenir un dosage du fluide additif qui soit toujours constant quelle que soit la position de la palette 11 et par conséquent du débit de liquide dans le conduit 1.

Pour faire varier la consigne de proportionnalité, il faut faire varier la dimension de l'orifice 10 et c'est l'objet du dispositif représenté aux figures 1 à 5 qui comprend un élément de conduit 15 présentant des brides 16, 17 par lesquelles ledit élément de conduit est raccordé au conduit principal 1 véhiculant le liquide. A l'intérieur de l'élément de conduit principal 15 est disposée une palette 18 montée pivotante autour d'un axe $XX_1$ constitué par une tige 19 fixe en rotation, ladite palette 18 étant solidaire en rotation d'un demi-manchon 20 lui-même monté pivotant autour de la tige 19 qui est solidaire des parois de l'élément tubulaire 15.

La palette 18 comme la palette 11 est soumise à l'action d'un ressort hélicoïdal 21 fixé à l'une de ses extrémités en 22 sur la paroi intérieure de l'élément de conduit 15 et à l'autre extrémité en 23 sur la palette 18 dont la course est limitée d'un côté par un organe de butée 24, de telle sorte que la palette 18 soumise à l'action du flux de liquide s'écoulant suivant la flèche F contre l'action du ressort 21 joue le rôle d'un organe d'étranglement du flux de liquide.

La tige 19 est guidée à l'une de ses extrémités dans un alésage 25 ménagé dans la paroi de l'élément de conduit 15 et à son autre extrémité elle présente une tête 26 qui est montée rotative dans un logement 27 d'un bouchon fileté 28 engagé dans un trou taraudé 29 d'une partie tubulaire 30 ménagée sur l'un des côtés de l'élément de conduit 15. Le bouchon fileté 28 est muni à l'une de ses extrémités d'un bouton de manoeuvre 31 s'étendant à l'extérieur de la partie tubulaire 30 et le bouchon est muni dans sa partie médiane d'un joint d'étanchéité 32 disposé dans une gorge dudit bouchon.

Dans sa partie médiane la tige 19 comporte une goupille 33 qui est montée coulissante dans une rainure 34 de la paroi de l'élément de conduit 15, cette disposition permet d'immobiliser en rotation la tige 19 et de permettre son déplacement axial en agissant sur le bouton de manoeuvre 31 qui entraîne en rotation et en translation le bouchon 28.

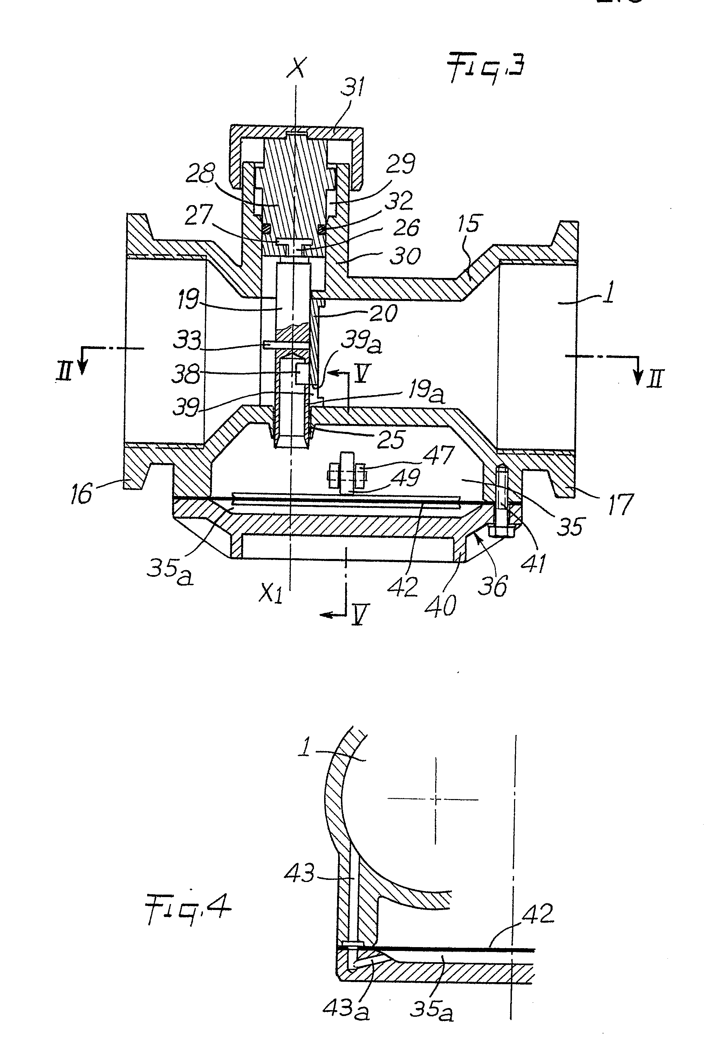

A son extrémité opposée au bouchon 28, la tige 19 présente une partie tubulaire 19a débouchant d'un côté dans une chambre 35 d'un régulateur de pression 36 qui sera décrit ultérieurement, ladite chambre étant alimentée en fluide additif par le conduit 37 (figures 3 et 5).

A son autre extrémité, la partie tubulaire 19a présente un orifice latéral 38 dont l'ouverture est contrôlée par le demi-manchon 20 solidaire de la palette 18 et qui joue le rôle d'obturateur de l'orifice de sortie 38 qui est en communication avec le conduit principal lorsque la palette se soulève et occupe une position 18a, de telle sorte que le demi-manchon 20 découvre progressivement l'orifice 38, celui-ci déversant dans l'élément de conduit principal 15 une quantité de fluide additif proportionnelle à la quantité de liquide que laisse passer la palette 18. Par ailleurs, la largeur de l'orifice 38 est variable du fait que le demi-manchon 20 présente une ouverture 39 délimitée par un bord 39a qui permet le passage du fluide additif en provenance de l'élément tubulaire 19a à travers les orifices 38 et 39.

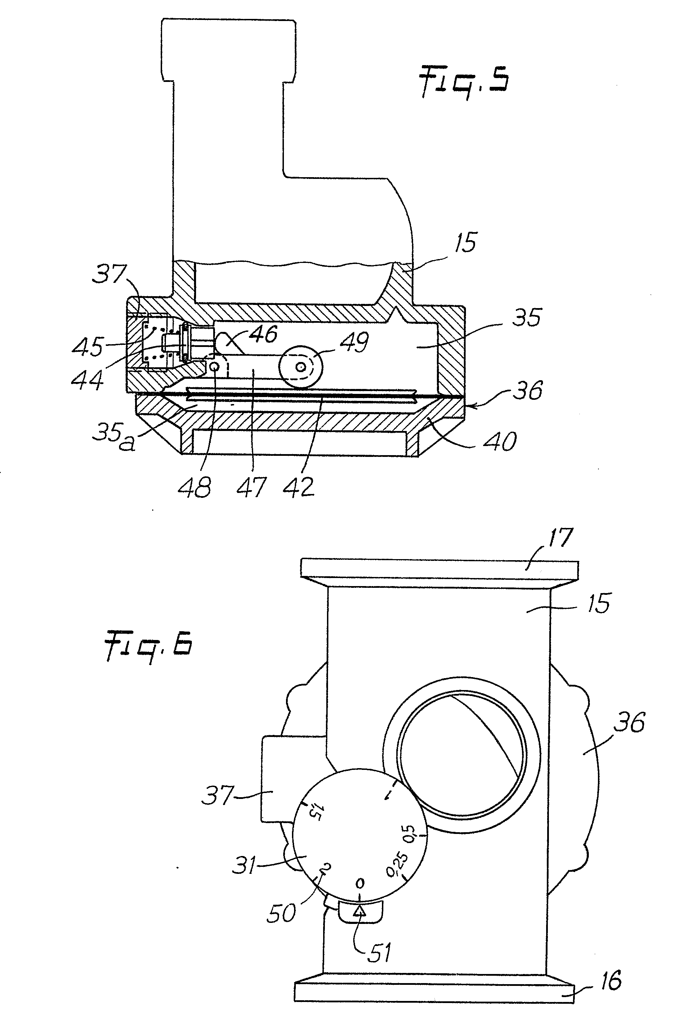

Dans le mode de réalisation représenté aux figures 2, 3, 4 et 5, le régulateur de pression 36 est constitué d'un boîtier intégré à l'élément de conduit principal 15 et fermé par un couvercle 40 fixé sur le boîtier au moyen de vis 41. Entre le boîtier et le couvercle 40 est disposée une membrane déformable 42 séparant l'intérieur du régulateur en deux chambres 35 et 35a. La chambre 35a est reliée à l'intérieur du conduit principal 1 par des conduits 43, 43a (figure 4) qui transmettent la pression P du liquide à l'intérieur de la chambre 35a ainsi qu'il a été représenté à la figure 1 et décrit ci-dessus. D'autre part, le conduit 37 d'entrée de fluide additif dans la chambre 35 présente un orifice dans lequel est disposé un clapet 44 maintenu en position de fermeture par un ressort 45 et actionné par un bec 46 d'un levier 47 articulé autour d'un axe 48 et présentant à son extrémité libre un galet 49 en contact avec la membrane 42.

De cette manière, les déplacements de la membrane 42 entraînent le déplacement du galet 49 et du levier 47 qui agit par son bec 46 sur le clapet 44 assurant ainsi l'entrée du fluide additif dans la chambre 35 à une pression P égale à la pression dans le conduit principal 1 et de là dans la partie tubulaire 19a de la tige 19.

Le dispositif suivant l'invention fonctionne de la manière suivante:

Pour faire varier la consigne de proportionnalité entre le fluide additif et le liquide circulant dans le conduit principal, on agit sur le bouton de manoeuvre 31 qui porte des graduations 50 se déplaçant en regard d'un index fixe 51. La rotation du bouton 31 entraîne le bouchon 28 qui se déplace en rotation et en translation assurant le déplacement axial de la tige 19 et par suite le déplacement de l'orifice 38 par rapport au bord 39a de l'orifice 39, de telle sorte que la largeur de l'orifice 38 varie en fonction du déplacement axial de la tige 19 et de la rotation du bouton de manoeuvre.

Lorsque le liquide circule dans le conduit principal 1 il soulève la palette 18 contre l'action du ressort 21 et le demi-manchon 20 se déplace en découvrant plus ou moins l'orifice 38, de telle sorte que l'injection de fluide additif soit proportionnelle à la quantité de liquide traversant le conduit principal, la consigne de proportionnalité pouvant varier en fonction de la largeur de l'orifice 38 à section variable.

6

Lorsqu'aucun débit de liquide n'existe dans le conduit principal 1, la palette 18 referme rigoureusement l'orifice 38 prévu dans la partie tubulaire de la tige 19, on obtient alors une fermeture parfaite, le dispositif se présentant comme un clapet.

Dans le cas où le dispositif fontionne notamment sur l'aspiration d'une pompe d'irrigation, la pompe auxiliaire qui sert à établir une pression d'injection supérieure à la pression amont de l'appareil, n'est évidemment plus nécessaire.

Bien entendu, l'invention n'est pas limitative et l'homme de l'art pourra y apporter des modifications, sans sortir pour cela du domaine de l'invention.

REVENDICATIONS

1.      Dispositif de contrôle d'injection réglable d'un fluide additif dans un liquide s'écoulant dans un conduit principal qui
est relié à un conduit secondaire véhiculant le fluide additif et
dans lequel la pression est égale à celle régnant dans le conduit
principal, ledit conduit principal renfermant un organe d'étranglement soumis à l'action d'un organe élastique et s'opposant à
l'écoulement du liquide dans ledit conduit principal, ledit organe
d'étranglement assurant l'entraînement d'un organe d'étranglement
homothétique disposé dans le conduit secondaire d'alimentation
en fluide additif, caractérisé en ce que l'organe d'étranglement disposé dans le conduit principal est constitué par une palette (18), soumise à l'action d'un organe élastique (21),
agissant à l'encontre du flux de liquide, ladite palette  (18)
étant montée rotative autour d'une tige  (19), présentant une partie tubulaire  (19a) reliée au conduit de fluide additif et comportant un orifice (38) d'ouverture réglable en fonction d'une part de la
position angulaire d'un organe obturateur (20) solidaire en rotation
de la palette (18) et d'autre part de la position axiale dudit orifice
(38) de la partie tubulaire de la tige (19) par rapport à l'organe
obturateur (20).

2.      Dispositif suivant la revendication 1, caractérisé en
ce que la tige (19) comportant la partie tubulaire (19a) présentant
l'orifice d'injection (38) du fluide additif est montée coulissante
axialement dans au moins un organe de guidage solidaire du conduit
principal (1, 15) et dans l'organe obturateur (20) solidaire de la
palette (18), ladite tige (19) étant reliée à l'une de ses extrémités à un moyen de commande (28, 31) pour l'entraînement axial de
la tige (19).

3.       . Dispositif suivant la revendication 2, caractérisé en
ce que la tige (19) autour de laquelle est montée rotative la
palette (18) est guidée axialement par une goupille (33) disposée
dans une fente (34) de la paroi du conduit principal (1, 15), ladite tige (19) étant reliée de façon rotative à un bouchon (28) fileté engagé dans un trou taraudé (29) d'un élément tubulaire (30) solidaire de la paroi du conduit principal (15), ledit bouchon fileté (28) étant solidaire d'un bouton de manoeuvre (31) portant des graduations (50) relatives au dosage du fluide additif.

4.        Dispositif suivant l'une quelconque des revendications 1 à 3, caractérisé en ce que le conduit principal (1, 15) est solidaire d'un boîtier renfermant un régulateur de pression (36) comportant deux chambres (35, 35a) séparées par une membrane déformable (42), l'une des chambres (35a) étant en communication avec le conduit principal (1, 15) et l'autre chambre (35) étant en communication d'une part avec un conduit de refoulement (37) d'une pompe d'alimentation en fluide additif dont l'orifice comporte un clapet (44) commandé par les déplacements de la membrane déformable (42) et d'autre part avec la partie tubulaire (19a) de la tige (19) autour de laquelle est montée pivotante la palette (18).

**Fig.1**

**Fig.2**

Fig.3

Fig.4

_Fig.5_

37

45

44

35a

48  47  42

46  49  35

15

36

40

_Fig.6_

17

15

37

31

50

51

36

16

Office européen
des brevets

**RAPPORT DE RECHERCHE EUROPEENNE**

Numero de la demande

EP  83 40 0356

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | DE-C- 883 662 (G. WAGNER) * Page 2, lignes 34-93; figures 1-3 * | 1 | G 05 D  11/03 F 16 K   3/32 |
| Y | DE-A-1 498 477 (G. WAGNER) * Page 4, ligne 14 - page 5, ligne 20; figure 1 * | 1 | |
| A | CH-A- 384 230 (A. KLÜBER) * Page 1, lignes 1-5; page 2, lignes 14-28, 101-112; figures 2,9-11 * | 1 | |
| A | GB-A- 780 191 (POWER JETS-RESEARCH AND DEVELOPMENT* * Page 1, ligne 56 - page 2, ligne 41; figures 1,2 * | 2,3 | |
| A | FR-A-2 448 746 (SOCIETE D'ETUDE ET DE REALISATION D'EQUIPEMENTS SPECIAUX SERES) * Page 1, ligne 25 - page 2, ligne 1; page 4, ligne 2 - page 5, ligne 37; figure 1 * | 4 | **DOMAINES TECHNIQUES RECHERCHES (Int. Cl. 3)** G 05 D  11/00 F 16 K   3/00 |

Le présent rapport de recherche a été établi pour toutes les revendications

| Lieu de la recherche LA HAYE | Date d'achèvement de la recherche 16-06-1983 | Examinateur POINT A.G.F. |
|---|---|---|